# EUROPEAN PATENT APPLICATION

(11) **EP 2 060 681 A2**
(43) Date of publication of application: **20.05.2009**
(21) Application number: 08019562.1
(22) Date of filing: 08.11.2008
(51) Int. Cl.: E02F 9/20, E02F 9/22, B60W 50/02

(54) **Apparatus and method for controlling engine revolutions for excavator**

(30) Priority: 13.11.2007 KR 20070115558
(71) Applicant: Volvo Construction Equipment Holding Sweden AB, 631 85 Eskilstuna (SE)
(72) Inventor: Yang, Hak Yong, Gyeongsangnam-do (KR)
(74) Representative: Schmidt, Sven Hendrik

(57) **Abstract**

An apparatus and method for controlling engine revolutions for an excavator is provided, which can set the excavator not to perform a normal operation so as to induce an operator to check an air cleaner (20) by reducing a flow rate of hydraulic fluid discharged from a hydraulic pump (60) through lowering of the engine revolutions if an operator disregards a warning signal for requiring the operator to check an engine intake system and continues the excavator work even when a predetermined time elapses after transfer of the warning signal or the warning signal is transferred over a predetermined number of times. The apparatus includes an engine (10) and a hydraulic pump (60), an air cleaner (20) for filtering out foreign substances included in outside air being inhaled into an engine combustion chamber, a pressure sensor (30), installed in a bypass between the air cleaner (20) and the engine combustion chamber, for detecting pressure of the air in the bypass, and an electronic control unit (40) for outputting a warning signal for requiring an operator to check the air cleaner (20) if the pressure signal exceeds a reference pressure value, and lowering the engine revolutions and reducing the flow rate from the hydraulic pump (60) if the operator disregards the warning signal and continues the excavator work after the transfer of the warning signal.

## Description

### CROSS-REFERENCE TO RELATED APPLICATION

This application is based on and claims priority from Korean Patent Application No. 10-2007-0115558, filed on November 13, 2007 in the Korean Intellectual Property Office, the disclosure of which is incorporated herein in its entirety by reference.

### BACKGROUND OF THE INVENTION

### Field of the invention

The present invention relates to an apparatus and method for controlling engine revolutions for an excavator, which can intervene in the operation of the excavator through lowering of the engine revolutions if an operator disregards a warning signal for requiring the operator to check an engine intake system and continues the excavator work even when a predetermined time elapses after transfer of the warning signal to the operator.

More particularly, the present invention relates to an apparatus and method for controlling engine revolutions for an excavator, which can set the excavator not to perform a normal operation so as to induce an operator to check an air cleaner and so on by reducing a flow rate of hydraulic fluid discharged from a hydraulic pump through lowering of the engine revolutions if an operator disregards a warning signal for requiring the operator to check an engine intake system and continues the excavator work even when a predetermined time elapses after transfer of the warning signal to the operator or the warning signal is transferred to the operator over a predetermined number of times.

### Description of the Prior Art

In general, construction equipment such as an excavator works in inferior working environments. Outside air inhaled into an engine combustion chamber during the operation of the excavator includes foreign substances, such as fine particles including dust, soil, sand, and the like. Such outside air is supplied to the engine combustion chamber after being filtered through an air cleaner.

That is, as the outside air is introduced into the engine combustion chamber after the foreign substances, such as soil, dust, and the like, included in the outside air are filtered out by the air cleaner, sliding parts of an engine are prevented from being worn down or damaged, and thus the lifespan of the corresponding parts are prolonged.

The flow of the outside air into the engine combustion chamber may not be smooth due to the foreign substances accumulated in elements of the air cleaner to increase the resistance, and in this case, a corresponding system informs an operator in an operator's seat of the replacement time of the air cleaner and so on.

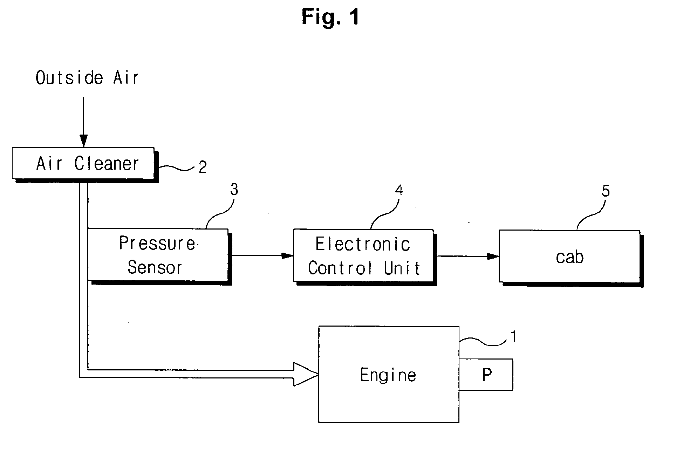

As illustrated in FIG. 1, a conventional apparatus for controlling engine revolutions for an excavator includes an engine 1 installed in the excavator; a pre-cleaner (not illustrated) for firstly separating outside air being inhaled into an engine combustion chamber into air and foreign substances, such as fine particles by applying a centrifugal force thereto; an air cleaner 2 for filtering out foreign substances, such as dust, soil, and the like, included in the outside air, which has passed through the pre-cleaner, through elements and supplying the filtered air to the engine combustion chamber (in the case of a wet type air cleaner, oil is replaced, while in the case of a dry type air cleaner, a filter is cleaned or replaced); a pressure sensor 3, installed in a bypass (i.e. an intake manifold) between the air cleaner 2 and the engine combustion chamber, for detecting pressure of the air in the bypass and outputting a pressure signal corresponding to the detected pressure; and an electronic control unit (ECU) 4 for comparing the pressure signal inputted from the pressure sensor 3 with a predetermined reference pressure value, and if the pressure signal exceeds the reference pressure value, outputting a warning signal for requiring an operator in a cab 5 to check an engine intake system (including the air cleaner) having the increased pressure.

According to the conventional apparatus for controlling engine revolutions for an excavator as constructed above, if the pressure of the outside air being inhaled into the engine combustion chamber exceeds the predetermined reference pressure value due to the clogging of the air cleaner 2 and so on, the electronic control unit 4 transfers the warning signal to the operator to induce the operator to check the air cleaner 2.

In this case, if the operator disregards the warning signal transferred from the electronic control unit 4 and continues the work, the consumption of fuel in the engine 1 is increased, and pipes and hoses constituting the intake system may be damaged.

Accordingly, the foreign substances, such as dust, included in the outside air are directly inhaled into the engine combustion chamber, and this causes the damage of the engine 1 to shorten the lifespan of the engine.

### SUMMARY OF THE INVENTION

Accordingly, the present invention has been made to solve the above-mentioned problems occurring in the prior art while advantages achieved by the prior art are maintained intact.

One object of the present invention is to provide an apparatus and method for controlling engine revolutions for an excavator, which can set working devices (e.g. a boom, an arm, and the like) of the excavator not to perform a normal operation by reducing a flow rate of hydraulic fluid discharged from a hydraulic pump through lowering of the engine revolutions if an operator disregards a warning signal for requiring the operator to check an engine intake system and continues the excavator work even when a predetermined time elapses after transfer of the warning signal to the operator.

In order to accomplish this and other objects, there is provided an apparatus for controlling engine revolutions for an excavator, according to an embodiment of the present invention, which includes an engine and a hydraulic pump installed in the excavator; an air cleaner for filtering out foreign substances included in outside air being inhaled into an engine combustion chamber through elements and supplying the filtered air to the engine combustion chamber; a pressure sensor, installed in a bypass between the air cleaner and the engine combustion chamber, for detecting pressure of the air in the bypass and outputting a pressure signal corresponding to the detected pressure; and an electronic control unit (ECU) for comparing the pressure signal inputted from the pressure sensor 3 with a predetermined reference pressure value, outputting a warning signal for requiring an operator in a cab to check the air cleaner if the pressure signal exceeds the reference pressure value, and lowering the engine revolutions and reducing a flow rate of hydraulic fluid discharged from the hydraulic pump if the operator disregards the warning signal and continues the excavator work after the transfer of the warning signal to the operator.

In a preferred embodiment of the present invention, the warning signal may be transferred from the ECU to the operator in the cab through a warning light or a warning sound or message.

In another aspect of the present invention, there is provided a method for controlling engine revolutions for an excavator including an engine, a hydraulic pump, an air cleaner, a pressure sensor, and an electronic control unit, which includes a first step of detecting pressure of outside air being inhaled into an engine combustion chamber through the air cleaner using the pressure sensor; a second step of comparing a value of the pressure detected by the pressure sensor with a predetermined reference pressure value; a third step of transferring a warning signal for requiring an operator to check the air cleaner to the operator if the detected pressure value exceeds the reference pressure value; a fourth step of confirming whether the air cleaner has been checked; and a fifth step of lowering the engine revolution and reducing a flow rate of hydraulic fluid discharged from the hydraulic pump in accordance with a control signal from the electronic control unit if the operator disregards the warning signal and continues the excavator work after the transfer of the warning signal to the operator.

The fifth step may include the steps of intervening in operation of working devices by firstly lowering the engine revolutions and reducing the flow rate of the hydraulic fluid discharged from the hydraulic pump if the operator disregards the warning signal and continues the excavator work after the transfer of the warning signal to the operator; and setting working devices of the excavator not to perform a normal operation by secondly lowering the engine revolutions and reducing the flow rate of the hydraulic fluid discharged from the hydraulic pump if the operator disregards the warning signal and continues the excavator work after the intervening in the operation of the working devices.

The method for controlling engine revolutions according to an embodiment of the present invention may further include the step of judging that the operator has disregarded the warning signal if a predetermined time elapses after the transfer of the warning signal to the operator.

The method for controlling engine revolutions according to an embodiment of the present invention may further include the step of judging that the operator has disregarded the warning signal if the warning signal is transferred to the operator over a predetermined number of times.

With the above-described construction, if an operator disregards a warning signal for requiring the operator to check an engine intake system and continues the excavator work even when a predetermined time elapses after transfer of the warning signal to the operator or the warning signal is transferred to the operator over a predetermined number of times, the flow rate of hydraulic fluid discharged from a hydraulic pump is reduced through lowering of the engine revolutions, and thus the excavator does not perform a normal operation, so that an operator checks the engine intake system to protect the engine.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic block diagram illustrating the configuration of a conventional apparatus for controlling engine revolutions for an excavator;
FIG. 2 is a schematic block diagram illustrating the configuration of an apparatus for controlling engine revolutions for an excavator according to an embodiment of the present invention;
FIG. 3 is a graph explaining the control of engine revolution performed by the apparatus for controlling engine revolutions for an excavator according to an embodiment of the present invention; and
FIG. 4 is a flowchart illustrating a method for controlling engine revolutions for an excavator according to an embodiment of the present invention.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

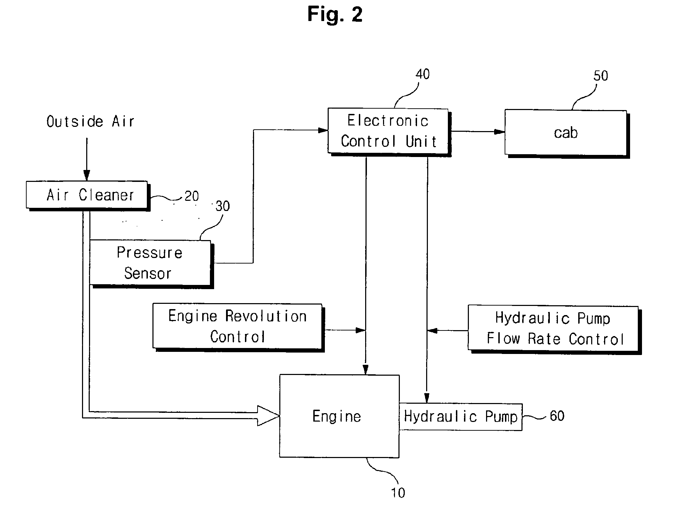

As illustrated in FIG. 2, an apparatus for controlling engine revolutions for an excavator according to an embodiment of the present invention includes an engine 10 installed in the excavator and a hydraulic pump 60 connected to the engine 10; an air cleaner 20 for filtering out foreign substances included in outside air being inhaled into an engine combustion chamber through elements and supplying the filtered air to the engine combustion chamber; a pressure sensor 30, installed in a bypass between the air cleaner 20 and the engine combustion chamber, for detecting pressure of the air in the bypass and outputting a pressure signal corresponding to the detected pressure; and an electronic control unit (ECU) 40 for comparing the pressure signal inputted from the pressure sensor 30 with a predetermined reference pressure value, outputting a warning signal for requiring an operator in a cab 50 to check the air cleaner 20 if the pressure signal exceeds the reference pressure value, and outputting a control signal for compulsorily lowering the revolutions of the engine 10 and reducing a flow rate of hydraulic fluid discharged from the hydraulic pump 60 if a predetermined time elapses after the transfer of the warning signal to the operator or the warning signal is transferred to the operator over a predetermined number of times.

The warning signal is transferred from the electronic control unit 40 to the operator in the cab 50 through a warning light or a warning sound or message.

Since the techniques of inhaling the outside air to the combustion chamber of the engine 10 through the air cleaner 20 during the operation of the engine 10, inputting the pressure signal of the outside air detected by the pressure sensor 30 to the electronic control unit 40, and lowering the revolutions of the engine 10 and reducing the flow rate of the hydraulic fluid discharged from the hydraulic pump 60 in accordance with the control signal from the electronic control unit 40 are known in the technical field to which the present invention pertains, the detailed description thereof will be omitted.

Hereinafter, the apparatus and method for controlling engine revolutions for an excavator according to an embodiment of the present invention will be described with reference to the accompanying drawings.

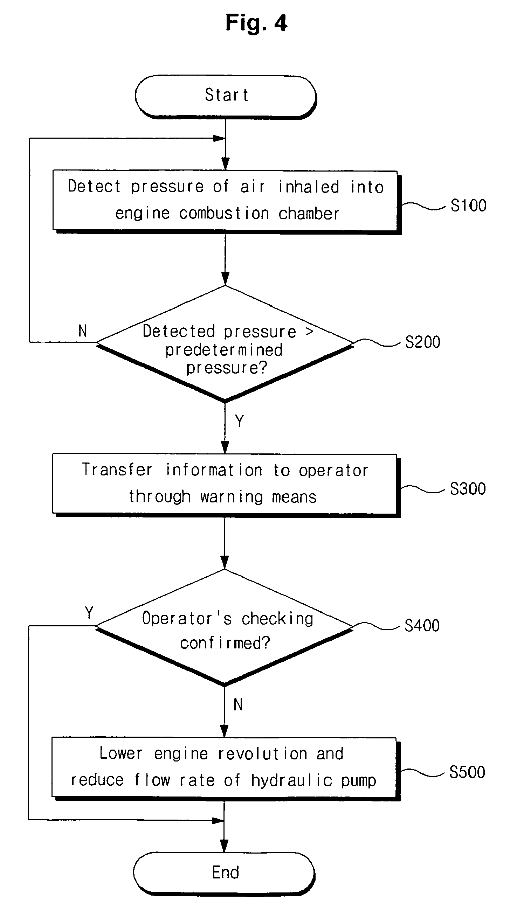

Referring to FIGS. 2 to 4, in step S100, the pressure of the outside air being inhaled into the combustion chamber of the engine 10 after passing through the air cleaner 20 and an inhale tube under the operation of the engine is detected by the pressure sensor 30.

In this case, foreign substances, such as dust, fine particles, soil, and the like, included in the outside air being inhaled into the combustion chamber of the engine 10 are filtered out by the air cleaner 20 (e.g. wet type air cleaner or dry type air cleaner).

In step S200, the pressure value corresponding to the pressure of the outside air detected by the pressure sensor 30 is compared with the predetermined reference pressure value.

In step S300, if the detected pressure value exceeds the reference pressure value (which corresponds to a state that the air cleaner 20 is severely polluted and thus the replacement of the air cleaner is required) as a result of comparison, it is judged that the replacement time of the air cleaner 20 arrives, and the warning signal is transferred to the operator so that the operator checks and confirms the intake system such as the air cleaner 20.

In this case, the warning signal may be transferred to the operator in the cab 50 through a warning light or a warning sound or message.

In step S400, after the transfer of the warning signal to the operator, it is judged whether the polluted air cleaner has been checked.

In step S500, if a predetermined time elapses after the transfer of the warning signal to the operator, or the warning signal is transferred to the operator over a predetermined number of times (which corresponds to a state that the operator disregards the warning signal and continues the excavator work), the revolutions of the engine 10 are lowered and the flow rate of the hydraulic fluid discharged from the hydraulic pump 60 is compulsorily reduced in accordance with the control signal from the electronic control unit 40.

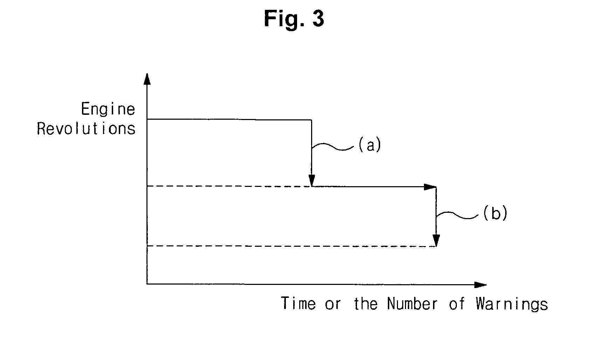

The step S500 is to induce the operator to check the polluted air cleaner 20 and to perform the work. That is, if a predetermined time elapses after the transfer of the warning signal to the operator, or the warning signal is transferred to the operator over a predetermined number of times, the revolutions of the engine 10 is firstly lowered and the flow rate of the hydraulic fluid discharged from the hydraulic pump 60 is reduced (as indicated as section "a" in FIG. 3). Accordingly, the working device does not operate smoothly even if the operator manipulates the working device (such as a boom and so on).

On the other hand, if the operator continues the working after the transfer of the warning through the intervening in the operation of the working device, the revolutions of the engine 10 are secondly lowered and the flow rate of the hydraulic fluid discharged from the hydraulic pump 60 is reduced (as indicated as section "b" in FIG. 3). Accordingly, the operating speed of the working device is considerably lowered even if the operator forcibly manipulates the working device.

As described above, if the operator disregards the warning signal for requiring the operator to check the air cleaner 20 and continues the excavator work in a state that the pressure value of the outside air of the intake system exceeds the reference pressure value due to the pollution of the air cleaner 20 and so on, the revolutions of the engine 10 are lowered, and the flow rate of the hydraulic fluid discharged from the hydraulic pump 60 is reduced. This induces the operator, who cannot perform the normal operation of the working device, to check the air cleaner 20.

Although preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. An apparatus for controlling engine revolutions for an excavator, comprising:
an engine and a hydraulic pump installed in the excavator;
an air cleaner for filtering out foreign substances included in outside air being inhaled into an engine combustion chamber through elements and supplying the filtered air to the engine combustion chamber;
a pressure sensor, installed in a bypass between the air cleaner and the engine combustion chamber, for detecting pressure of the air in the bypass and outputting a pressure signal corresponding to the detected pressure; and
an electronic control unit (ECU) for comparing the pressure signal inputted from the pressure sensor 3 with a predetermined reference pressure value, outputting a warning signal for requiring an operator in a cab to check the air cleaner if the pressure signal exceeds the reference pressure value, and lowering the engine revolutions and reducing a flow rate of hydraulic fluid discharged from the hydraulic pump if the operator disregards the warning signal and continues the excavator work after the transfer of the warning signal to the operator.

2. The apparatus of claim 1, wherein the warning signal is transferred from the ECU to the operator in the cab through a warning light or a warning sound or message.

3. A method for controlling engine revolutions for an excavator including an engine, a hydraulic pump, an air cleaner, a pressure sensor, and an electronic control unit, the method comprising:
a first step of detecting pressure of outside air being inhaled into an engine combustion chamber through the air cleaner using the pressure sensor;
a second step of comparing a value of the pressure detected by the pressure sensor with a predetermined reference pressure value;
a third step of transferring a warning signal for requiring an operator to check the air cleaner to the operator if the detected pressure value exceeds the reference pressure value;
a fourth step of confirming whether the air cleaner has been checked; and
a fifth step of lowering the engine revolutions and reducing a flow rate of hydraulic fluid discharged from the hydraulic pump in accordance with a control signal from the electronic control unit if the operator disregards the warning signal and continues the excavator work after the transfer of the warning signal to the operator.

4. The method of claim 3, wherein the fifth step comprises the steps of:
intervening in operation of working devices by firstly lowering the engine revolutions and reducing the flow rate of the hydraulic fluid discharged from the hydraulic pump if the operator disregards the warning signal and continues the excavator work after the transfer of the warning signal to the operator; and
setting working devices of the excavator not to perform a normal operation by secondly lowering the engine revolutions and reducing the flow rate of the hydraulic fluid discharged from the hydraulic pump if the operator disregards the warning signal and continues the excavator work after the intervening in the operation of the working devices.

5. The method of claim 3 or 4, further comprising the step of judging that the operator has disregarded the warning signal if a predetermined time elapses after the transfer of the warning signal to the operator.

6. The method of claim 3 or 4, further comprising the step of judging that the operator has disregarded the warning signal if the warning signal is transferred to the operator over a predetermined number of times.
